(19) **Europäisches Patentamt / European Patent Office / Office européen des brevets**

(11) **EP 3 713 098 B1**

(12) **EUROPEAN PATENT SPECIFICATION**

(45) Date of publication and mention
of the grant of the patent:
**27.04.2022 Bulletin 2022/17**

(21) Application number: **19164645.4**

(22) Date of filing: **22.03.2019**

(51) International Patent Classification (IPC):
**H04B 1/69** *(2011.01)*      **H04N 5/50** *(2006.01)*

(52) Cooperative Patent Classification (CPC):
**H04W 48/16**

(54) **DEVICE AND METHOD OF HANDLING A BLIND SCAN OF A FREQUENCY SPECTRUM**

VORRICHTUNG UND VERFAHREN ZUR HANDHABUNG EINER BLINDABTASTUNG EINES FREQUENZSPEKTRUMS

DISPOSITIF ET PROCÉDÉ DE GESTION D'UN BALAYAGE AVEUGLE D'UN SPECTRE DE FRÉQUENCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.09.2020 Bulletin 2020/39**

(73) Proprietor: **Realtek Semiconductor Corp.**
**30076 HsinChu (TW)**

(72) Inventor: **Wu, Chien-Hsin**
**407 Taichung City (TW)**

(74) Representative: **Straus, Alexander et al**
**2K Patent- und Rechtsanwälte - München**
**Keltenring 9**
**82041 Oberhaching (DE)**

(56) References cited:
**CN-A- 101 778 266      US-A1- 2011 135 042**

**Description**

Field of the Invention

The present invention relates to a device and a method of handling a blind scan of a frequency spectrum.

Background of the Invention

When a table including frequency positions and widths of signals in a frequency spectrum is not available, a blind scan is needed for recording the frequency positions and the widths of the signals. However, according to a traditional blind scan method, a detecting device needs to adjust a step length of a tuner according to the frequency positions in each scan, and false detections of the signals occur. In addition, due to varied step lengths, the detecting device needs to scan the frequency spectrum for a lot of times, which makes the scan inefficient. Thus, detecting the signals correctly and improving the efficiency of the scan are problems to be solved.

D1 (CN 101778266 A) discloses a blind scanning system for a DVB-S system. A control device of the system sets the analogue carrier frequency deviation of an analogue tuner according to a searching frequency range and judges whether signals are detected or not in a frequency spectrum output by a digital matched filter.

D2 (US 2011/0135042 A1) discloses a blind scan system in a DVB-S system includes a spectrum parameter extractor to fetch and calculate a coarse carrier frequency offset; a digital mixer to depend on the coarse frequency offset to shift the center of a spectrum of the signal; and an interpolator to perform a down-sampling on the offset signal according to the coarse symbol rate.

Summary of the Invention

The present invention therefore provides a device and method for handling a blind scan of a frequency spectrum to solve the abovementioned problem.

This is achieved by a device for handling the blind scan according to the independent claims here below. The dependent claims pertain to corresponding further developments and improvements.

Brief Description of the Drawings

Fig. 1 is a schematic diagram of a communication system according to an example of the present invention.
Fig. 2 is a schematic diagram of a signal detection device according to an example of the present invention.
Fig. 3 is a schematic diagram of a blind scan of a frequency spectrum performed by the signal detection device according to an example of the present invention.
Fig. 4 is a schematic diagram of a process of detecting signals of a frequency spectrum performed by the signal detection device according to an example of the present invention.
Fig. 5 is a flowchart of a process according to an example of the present invention.

Detailed Description

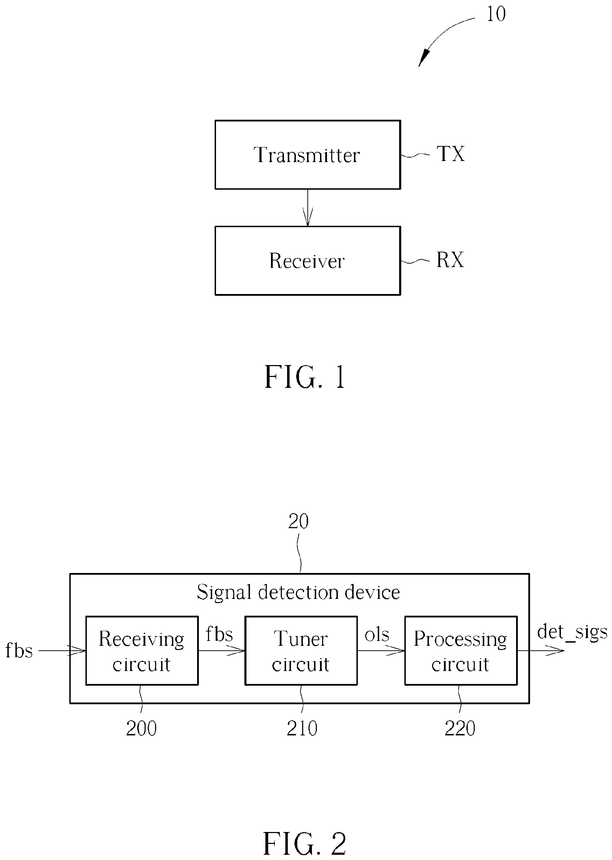

Fig. 1 is a schematic diagram of a communication system 10 according to an example of the present invention. The communication system 10 may be any communication system using an orthogonal frequency-division multiplexing (OFDM) technique (or termed as discrete multi-tone modulation (DMT) technique) or a non-OFDM technique, and is briefly composed of a transmitter TX and a receiver RX. In Fig. 1, the transmitter TX and the receiver RX are simply utilized for illustrating the structure of the communication system 10. For example, the communication system 10 may be any wired communication system such as an asymmetric digital subscriber line (ADSL) system, a power line communication (PLC) system or an Ethernet over coax (EOC), or may be any wireless communication system such as a wireless local area network (WLAN), a Digital Video Broadcasting (DVB) system, a Long Term Evolution (LTE) system, a Long Term Evolution-advanced (LTE-A) system or a fifth generation (5G) system. In addition, the transmitter TX and the receiver RX may be installed in a mobile phone, a laptop, etc., but is not limited herein.

Fig. 2 is a schematic diagram of a signal detection device 20 according to an example of the present invention. The signal detection device 20 may be utilized in the receiver RX of Fig. 1, but is not limited herein. The signal detection device 20 includes a receiving circuit 200, a tuner circuit 210 and a processing circuit 220. In detail, the receiving circuit 200 receives a full-band spectrum fbs. The tuner circuit 210 is coupled to the receiving circuit 200, for scanning the full-band spectrum fbs to generate a plurality of overlapped spectrums ols. The processing circuit 220 is coupled to the tuner circuit 210, for constructing a combined full-band spectrum according to the plurality of overlapped spectrums ols. The processing circuit 220 detects a plurality of signals det_sigs according to the plurality of overlapped spectrums.

In one example, the plurality of signals det_sigs are a plurality of satellite signals.

In one example, the tuner circuit 210 scans the full-band spectrum fbs with a step size from a left end of the full-band spectrum fbs to a right end of the full-band spectrum fbs, to generate the plurality of overlapped spectrums ols. In one example, a plurality of widths of a plurality of overlapped portions of the plurality of overlapped spectrums ols are the same. That is, the step size is a difference between a width of a tuner window and a width of each overlapped spectrum of the plurality of overlapped spectrums ols. In one example, two consecutive overlapped spectrums of the plurality of overlapped spectrums ols overlaps each other with an overlapped portion of the plurality of overlapped portions.

In one example, the tuner circuit 210 adjusts a plurality of signal strengths of the plurality of overlapped spectrums to a plurality of adjusted signal strengths according to the plurality of signal strengths of the plurality of overlapped spectrums. That is, the tuner circuit 210 may magnify, maintain or minify the plurality of signal strengths of the plurality of overlapped spectrums.

In one example, the processing circuit 220 combines the plurality of overlapped spectrums ols according to the plurality of overlapped portions and the plurality of adjusted signal strengths of the plurality of overlapped spectrums ols, to generate the combined full-band spectrum. That is, the processing circuit 220 combines the two consecutive overlapped spectrums according to the corresponding overlapped portion and the corresponding adjusted signal strengths. In one example, the signal strength of the overlapped portion is obtained by averaging the respective signal strengths of the overlapped portion of the two consecutive overlapped spectrums.

In one example, the processing circuit 220 detects the plurality of signals det_sigs in the combined full-band spectrum by obtaining a plurality of frequency positions corresponding to a plurality of signal-strength thresholds in the combined full-band spectrum, to determine a plurality of center frequencies. The processing circuit 220 records the plurality of signals det_sigs corresponding to the plurality of center frequencies. In one example, the plurality of center frequencies are determined according to a pair of consecutive frequency positions of the plurality of frequency positions corresponding to a same signal-strength threshold of the plurality of signal-strength thresholds. For example, the processing circuit 220 classifies each pair of consecutive frequency positions of the plurality of frequency positions corresponding to the plurality of signal-strength thresholds into a plurality of groups according to an average of each pair consecutive frequency positions. The pairs of consecutive frequency positions are classified into a same group, if a plurality of averages of the pairs of consecutive frequency positions are close. The processing circuit determines the plurality of center frequencies according to the plurality of groups, and records the plurality of signals det_sigs corresponding to the plurality of center frequencies.

In one example, the plurality of signal-strength thresholds are determined according at least one maximum signal strength in the combined full-band spectrum, at least one minimum signal strength in the combined full-band spectrum and a plurality of coefficients between 0 and 1. In one example, the plurality of signal-strength thresholds are determined according to the following equation:

$$\mathrm{THR}_i = (\mathrm{M} - \mathrm{m}) * \mathrm{r}_i + \mathrm{m}, \qquad\qquad (\mathrm{Eq.}1)$$

wherein $\mathrm{THR}_i$ is one of the plurality of signal-strength thresholds, M is one of the at least one maximum signal strength in the combined full-band spectrum, m is one of the at least one minimum signal strength of the combined full-band spectrum, and $\mathrm{r}_i$ is one of the plurality of coefficients, wherein the plurality of coefficients are between 0 and 1. In one example, the plurality of coefficients include 12/60, 19/60, 27/60, 34/60 and 42/60.

The following example is used for illustrating an operation of the signal detection device 20 performing a blind scan of a frequency spectrum.

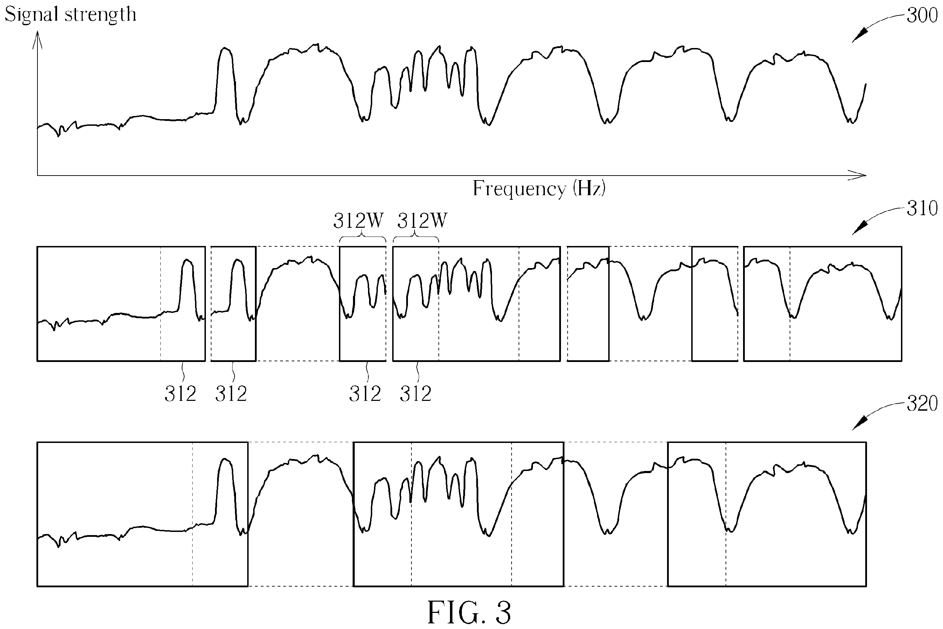

Fig. 3 is a schematic diagram of a blind scan of a frequency spectrum performed by the signal detection device 20 according to an example of the present invention. The receiving circuit 200 receives a full-band spectrum 300. The tuner circuit 210 scans the full-band spectrum 300, to generate a plurality of overlapped spectrums 310. A plurality of widths 312w of a plurality of overlapped portions 312 of the plurality of overlapped spectrums 310 are the same. The processing circuit 220 constructs a combined full-band spectrum 320 by combining the plurality of overlapped spectrums 310 according to the plurality of overlapped portions 312.

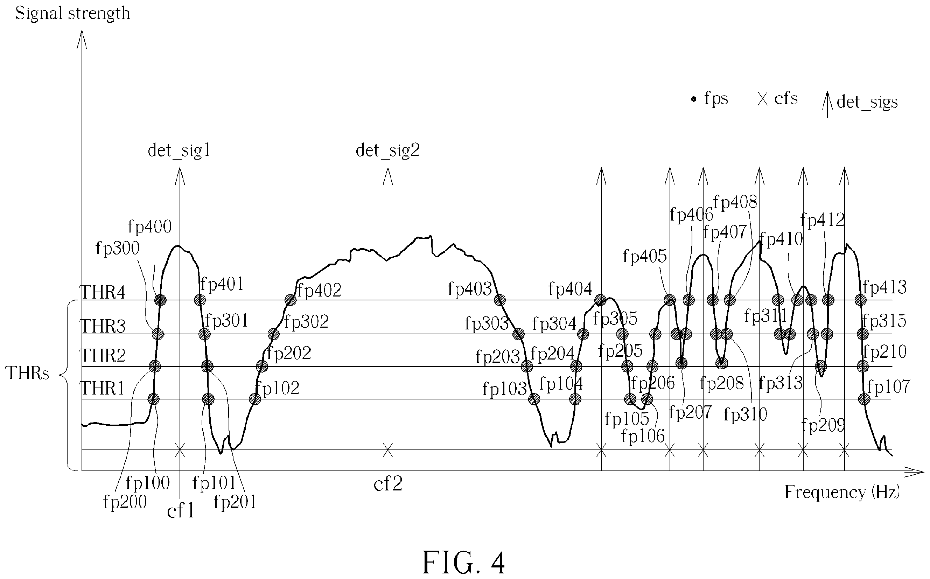

Fig. 4 is a schematic diagram of a blind scan of a frequency spectrum performed by the signal detection device 20 according to an example of the present invention. After the combined full-band spectrum 320 is constructed, the processing circuit 220 obtains a plurality of frequency positions fps (e.g., fp100, fp101, ..., and fp413) corresponding to a plurality of signal-strength thresholds THRs (e.g., THR1, THR2, THR3 and THR4) in the combined full-band spectrum 320. The processing circuit 220 determines a plurality of center frequencies cfs (e.g., cf1 and cf2) according to two consecutive frequency positions of the plurality of frequency positions fps corresponding to a same signal-strength threshold of the plurality of signal-strength thresholds THRs. The processing circuit 220 records a plurality of signals det_sigs (e.g., det_sig1 and det_sig2) corresponding to the plurality of center frequencies cfs.

As shown in Fig. 4, the processing circuit 220 obtains frequency positions fp100, fp101, ..., and fp107 corresponding to the signal-strength threshold THR1. The processing circuit 220 obtains frequency positions fp200, fp201, ..., and fp210 corresponding to the signal-strength threshold THR2. The processing circuit 220 obtains frequency positions fp300, fp301, ..., and fp315 corresponding to the signal-strength threshold THR3. The processing circuit 220 obtains frequency positions fp400, fp401, ..., and fp413 corresponding to the signal-strength threshold THR4. For each pair of consecutive frequency positions (e.g. (fp100, fp101), (fp102, fp103), (fp200, fp201) or (fp202, fp203)), the processing circuit 220 obtains a center frequency position of each of the pairs of consecutive frequency positions. The center frequency position may be determined according to the arithmetic average of the pair of consecutive frequencies or according to the geometric average of the pair of consecutive frequencies. According to the above center frequency positions, the processing circuit 220 may classify the pairs of consecutive frequency positions (fp100, fp101), (fp200, fp201), (fp300, fp301) and (fp400, fp401) into a same group since the center frequency positions of those pairs of consecutive frequency positions are close. The processing circuit 220 determines a center frequency cf1 according to the above classification, and records a signal det_sig1 corresponding to the center frequency cf1. The processing circuit may classify the pairs of consecutive frequency positions (fp102, fp103), (fp202, fp203), (fp302, fp303) and (fp402, fp403) into a same group since the center frequency positions of those pairs of consecutive frequency positions are close. The processing circuit 220 determines a center frequency cf2 according to the above classification, and records a signal det_sig2 corresponding to the center frequency cf2.

In one example, if more pairs of frequency positions are obtained between a fixed range of frequency as the signal-strength threshold increases, the processing circuit 220 may discard at least one pair of consecutive frequency position to avoid a false detection of signals. For example, as shown in Fig. 4, four frequency positions fp104, fp105, fp106 and fp107 are obtained according to the signal-strength threshold THR1. The processing circuit 220 may consider there are only two signals to be detected in the frequency range between fp104 and fp107. However, seven frequency positions fp204, fp205, ..., and fp210 are obtained according to another signal-strength threshold THR2, which means that there are at least three signals to be detected in the frequency range between fp104 and fp107. Since it is more possible for the pair of consecutive frequency positions (fp306, fp307) to be represented for a signal to be detected, the processing circuit 220 may discard the pair of consecutive frequency positions (fp206, fp207) to avoid missing detection of the signals.

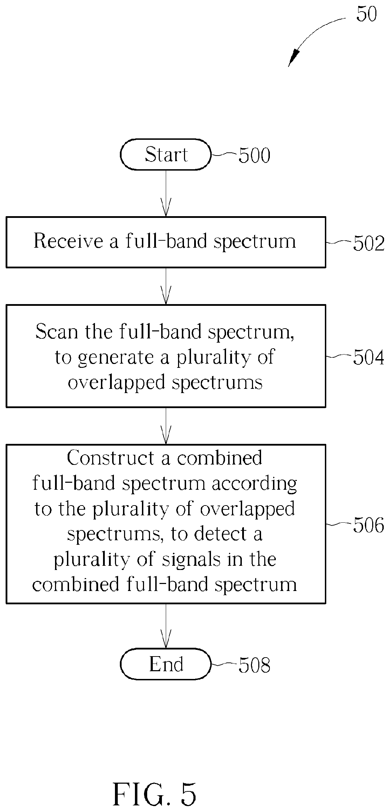

Operations of the signal detection device 20 in the above examples can be summarized into a process 50 shown in Fig. 5. The process 50 is utilized in the signal detection device 20, and includes the following steps:

> Step 500: Start.
> Step 502: Receive a full-band spectrum.
> Step 504: Scan the full-band spectrum, to generate a plurality of overlapped spectrums.
> Step 506: Construct a combined full-band spectrum according to the plurality of overlapped spectrums, to detect a plurality of signals in the combined full-band spectrum.
> Step 508: End.

The process 50 is used for illustrating the operations of the signal detection device 20. Detailed description and variations of the process 50 can be referred to the previous description, and are not narrated herein.

There are various realizations of the signal detection device 20 (including the receiving circuit 200, the tuner circuit 210 and the processing circuit 220). For example, the devices mentioned above may be integrated into one or more devices. In addition, the signal detection device 20 may be realized by hardware (e.g., circuit), software, firmware (known as a combination of a hardware device, computer instructions and data that reside as read-only software on the hardware device), an electronic system or a combination of the devices mentioned above, but is not limited herein.

To sum up, the present invention provides a device and a method of handling a blind scan of a frequency spectrum, for detecting a plurality of signals in the frequency spectrum. The present invention scans the frequency spectrum more efficiently than a traditional blind scan. Moreover, the correctness of the detected signals and the corresponding frequency positions are improved.

**Claims**

**1.** A signal detection device (20) for handling a blind scan of a frequency spectrum the signal detection device comprising a receiving circuit (200), configured for receiving a full-band spectrum;

> a tuner circuit (210), coupled to the receiving circuit, configured to scan the full-band spectrum with a step size from a left end of the full-band spectrum to a right end of the full-band spectrum, to generate a plurality of overlapped spectrums; and
a processing circuit (220), coupled to the tuner circuit, configured to construct a combined full-band spectrum according to the plurality of overlapped spectrums, to detect a first plurality of signals in the combined full-band spectrum.

2. The signal detection device of claim 1, wherein a plurality of widths of a plurality of overlapped portions of the plurality of overlapped spectrums are the same.

3. The signal detection device of any of claims 1-2, wherein the plurality of signals are a plurality of satellite signals.

4. The signal detection device of any of claims 1-3, wherein the tuner circuit adjusts a plurality of signal strengths of the plurality of overlapped spectrums to a plurality of adjusted signal strengths according to the plurality of signal strengths of the plurality of overlapped spectrums.

5. The signal detection device of any of claims 1-4, wherein the processing circuit combines the plurality of overlapped spectrums according to the plurality of overlapped portions and the plurality of adjusted signal strengths of the plurality of overlapped spectrums, to generate the combined full-band spectrum.

6. The signal detection device of any of claims 1-5, wherein the processing circuit detects the plurality of signals in the combined full-band spectrum by:

obtaining a plurality of frequency positions corresponding to a plurality of signal-strength thresholds in the combined full-band spectrum, to determine a plurality of center frequencies; and
recording the plurality of signals corresponding to the plurality of center frequencies.

7. The signal detection device of claim 6, wherein the plurality of center frequencies are determined according to a pair of consecutive frequency positions of the plurality of frequency positions corresponding to a same signal-strength threshold of the plurality of signal-strength thresholds.

8. The signal detection device of claim 6, wherein the plurality of signal-strength thresholds are determined according at least one maximum signal strength in the combined full-band spectrum, at least one minimum signal strength in the combined full-band spectrum and a plurality of coefficients between 0 and 1.

9. The signal detection device of claim 8, wherein the plurality of signal-strength thresholds are determined according to the following equation:

$$ \mathrm{THR}_i = (\mathrm{M} - \mathrm{m}) * \mathrm{r}_i + \mathrm{m}, $$

wherein $\mathrm{THR}_i$ is one of the plurality of signal-strength thresholds, M is one of the at least one maximum signal strength in the combined full-band spectrum, m is one of the at least one minimum signal strength in the combined full-band spectrum, and $\mathrm{r}_i$ is one of the plurality of coefficients, wherein the plurality of coefficients are between 0 and 1.

10. The signal detection device of any of claims 8-9, wherein the plurality of coefficients comprise 12/60, 19/60, 27/60, 34/60 and 42/60.

11. A method of handling a blind scan of a frequency spectrum for a signal detection device (20), wherein the method comprises the steps of:

receiving a full-band spectrum;
scanning the full-band spectrum with a step size from a left end of the full-band spectrum to a right end of the full-band spectrum, to generate a plurality of overlapped spectrums; and
constructing a combined full-band spectrum according to the plurality of overlapped spectrums, to detect a first plurality of signals in the combined full-band spectrum.

12. The method of claim 11, wherein the steps further comprise:
combining the plurality of overlapped spectrums according to a plurality of overlapped portions and a plurality of adjusted signal strengths of the plurality of overlapped spectrums, to generate the combined full-band spectrum.

13. The method of any of claims 11-12, wherein the steps further comprise:

> obtaining a plurality of frequency positions corresponding to a plurality of signal-strength thresholds in the combined full-band spectrum, to determine a plurality of center frequencies; and
> recording the plurality of signals corresponding to the plurality of center frequencies.

**Patentansprüche**

1. Signalerfassungsvorrichtung (20) zur Handhabung einer blinden Abtastung eines Frequenzspektrums, worin die Signalerfassungsvorrichtung umfasst:

> eine Empfangsschaltung (200), die konfiguriert ist, ein Vollbandspektrums zu empfangen;
> eine mit der Empfangsschaltung gekoppelte Tuner-Schaltung (210), die konfiguriert ist, das Vollbandspektrum mit einer Schrittgröße von einem linken Ende des Vollbandspektrums zu einem rechten Ende des Vollbandspektrums abzutasten, um mehrere überlappende Spektren zu erzeugen; und
> eine Verarbeitungsschaltung (220), die mit der Tuner-Schaltung gekoppelt ist und konfiguriert ist, ein kombiniertes Vollbandspektrum entsprechend den mehreren überlappenden Spektren zu erzeugen, um mehrere erste Signale in dem kombinierten Vollbandspektrum zu erfassen.

2. Signalerfassungsvorrichtung nach Anspruch 1, worin mehrere Breiten mehrerer überlappender Abschnitte der mehreren überlappenden Spektren die gleichen sind.

3. Signalerfassungsvorrichtung nach einem der Ansprüche 1 bis 2, worin die mehreren Signale mehrere Satellitensignale sind.

4. Signalerfassungsvorrichtung nach einem der Ansprüche 1 bis 3, wobei die Tuner-Schaltung mehrere Signalstärken der mehreren überlappenden Spektren auf mehrere eingestellte Signalstärken gemäß den mehreren Signalstärken der mehreren überlappenden Spektren einstellt.

5. Signalerfassungsvorrichtung nach einem der Ansprüche 1 bis 4, wobei die Verarbeitungsschaltung die mehreren überlappenden Spektren gemäß den mehreren überlappenden Abschnitten und den mehreren angepassten Signalstärken der mehreren überlappenden Spektren kombiniert, um das kombinierte Vollbandspektrum zu erzeugen.

6. Signalerfassungsvorrichtung nach einem der Ansprüche 1 bis 5, wobei die Verarbeitungsschaltung die mehreren Signale in dem kombinierten Vollbandspektrum erfasst, durch:

> Erhalten mehrerer Frequenzpositionen, die mehreren Signalstärkeschwellenwerten in dem kombinierten Vollbandspektrum entsprechen, um mehrere Mittenfrequenzen zu bestimmen; und
> Aufzeichnen der mehreren Signale, die den mehreren Mittenfrequenzen entsprechen.

7. Signalerfassungsvorrichtung nach Anspruch 6, wobei die mehreren Mittenfrequenzen gemäß einem Paar aufeinanderfolgender Frequenzpositionen der mehreren Frequenzpositionen bestimmt werden, die einem gleichen Signalstärkeschwellenwert der mehreren Signalstärkeschwellenwerte entsprechen.

8. Signalerfassungsvorrichtung nach Anspruch 6, wobei die mehreren Signalstärkeschwellenwerte entsprechend mindestens einer maximalen Signalstärke in dem kombinierten Vollbandspektrum, mindestens einer minimalen Signalstärke in dem kombinierten Vollbandspektrum und mehreren Koeffizienten zwischen 0 und 1 bestimmt werden.

9. Signalerfassungsvorrichtung nach Anspruch 8, wobei die mehreren Signalstärkeschwellenwerte nach der folgenden Gleichung bestimmt werden:

$$THR_i = (M-m)*r_i + m,$$

wobei $THR_i$ einer der mehreren Signalstärkeschwellenwerte ist, M eine der mindestens einen maximalen Signalstärken in dem kombinierten Vollbandspektrum ist, m eine der mindestens einen minimalen Signalstärken in dem kombinierten Vollbandspektrum ist und $r_i$ einer der mehreren Koeffizienten ist, worin die mehreren Koeffizienten zwischen 0 und 1 liegen.

**10.** Signalerfassungsvorrichtung nach einem der Ansprüche 8 bis 9, **dadurch gekennzeichnet, dass** die mehreren Koeffizienten 12/60, 19/60, 27/60, 34/60 und 42/60 umfassen.

**11.** Verfahren zur Handhabung einer blinden Abtastung eines Frequenzspektrums für eine Signalerfassungsvorrichtung (20), wobei das Verfahren die Schritte umfasst:

Empfangen eines Vollbandspektrums;
Abtasten des Vollbandspektrums mit einer Schrittgröße von einem linken Ende des Vollbandspektrums zu einem rechten Ende des Vollbandspektrums, um mehrere überlappende Spektren zu erzeugen; und
Erzeugen eines kombinierten Vollbandspektrums entsprechend der mehreren überlappenden Spektren, um mehrere erste Signale in dem kombinierten Vollbandspektrum zu erfassen.

**12.** Verfahren nach Anspruch 11, wobei die Schritte ferner umfassen:
Kombinieren der mehreren überlappenden Spektren gemäß mehreren überlappenden Abschnitten und mehreren angepassten Signalstärken der mehreren überlappenden Spektren, um das kombinierte Vollbandspektrum zu erzeugen.

**13.** Verfahren nach einem der Ansprüche 11 bis 12, wobei die Schritte ferner umfassen:

Erhalten mehrerer Frequenzpositionen, die mehreren Signalstärkeschwellenwerten in dem kombinierten Vollbandspektrum entsprechen, um mehrere Mittenfrequenzen zu bestimmen; und
Aufzeichnen der mehreren Signale, die den mehreren Mittenfrequenzen entsprechen.

**Revendications**

**1.** Dispositif de détection de signaux (20) pour traiter un balayage aveugle d'un spectre de fréquences, le dispositif de détection de signal comprenant:

un circuit de réception (200), configuré pour recevoir un spectre pleine bande;
un circuit de syntonisation (210), couplé au circuit de réception, configuré pour balayer le spectre pleine bande avec une taille de pas depuis une extrémité gauche du spectre pleine bande jusqu'à une extrémité droite du spectre pleine bande, pour générer une pluralité de spectres superposés; et
un circuit de traitement (220), couplé au circuit de syntonisation, configuré pour construire un spectre pleine bande combiné selon la pluralité de spectres superposés, pour détecter une première pluralité de signaux dans le spectre pleine bande combiné.

**2.** Dispositif de détection de signaux de la revendication 1, dans lequel une pluralité de largeurs d'une pluralité de parties chevauchées de la pluralité de spectres chevauchés sont les mêmes.

**3.** Dispositif de détection de signaux de l'une quelconque des revendications 1-2, dans lequel la pluralité de signaux est une pluralité de signaux de satellite.

**4.** Dispositif de détection de signaux de l'une quelconque des revendications 1-3, dans lequel le circuit de syntonisation ajuste une pluralité d'intensités de signal de la pluralité de spectres chevauchés à une pluralité d'intensités de signal ajustées selon la pluralité d'intensités de signal de la pluralité de spectres chevauchés.

**5.** Dispositif de détection de signaux de l'une quelconque des revendications 1 à 4, dans lequel le circuit de traitement combine la pluralité de spectres superposés selon la pluralité de parties superposées et la pluralité d'intensités de signal ajustées de la pluralité de spectres superposés, pour générer le spectre pleine bande combiné.

**6.** Dispositif de détection de signaux de l'une quelconque des revendications 1 à 5, dans lequel le circuit de traitement détecte la pluralité de signaux dans le spectre pleine bande combiné en:

l'obtention d'une pluralité de positions de fréquence correspondant à une pluralité de seuils d'intensité de signal dans le spectre pleine bande combiné, pour déterminer une pluralité de fréquences centrales; et

enregistrer la pluralité de signaux correspondant à la pluralité de fréquences centrales.

7. Dispositif de détection de signaux de la revendication 6, dans lequel la pluralité de fréquences centrales est déterminée selon une paire de positions de fréquence consécutives de la pluralité de positions de fréquence correspondant à un même seuil d'intensité de signal de la pluralité de seuils d'intensité de signal.

8. Dispositif de détection de signaux de la revendication 6, dans lequel la pluralité de seuils d'intensité de signal est déterminée selon au moins une intensité de signal maximale dans le spectre pleine bande combiné, au moins une intensité de signal minimale dans le spectre pleine bande combiné et une pluralité de coefficients entre 0 et 1.

9. Dispositif de détection de signaux de la revendication 8, dans lequel la pluralité de seuils d'intensité de signal est déterminée selon l'équation suivante:

$$THR_i=(M-m)*r_i+m,$$

dans laquelle $THR_i$ est l'un de la pluralité de seuils d'intensité de signal, M est l'une des au moins une intensité de signal maximale dans le spectre pleine bande combiné, m est l'une des au moins une intensité de signal minimale dans le spectre pleine bande combiné, et $r_i$ est l'un de la pluralité de coefficients, dans laquelle la pluralité de coefficients est comprise entre 0 et 1.

10. Dispositif de détection de signaux de l'une quelconque des revendications 8 à 9, **caractérisé en ce que** la pluralité de coefficients comprend 12/60, 19/60, 27/60, 34/60 et 42/60.

11. Procédé de traitement d'un balayage aveugle d'un spectre de fréquences pour un dispositif de détection de signaux (20), dans lequel le procédé comprend les étapes consistant à:

réception d'un spectre pleine bande;
balayer le spectre pleine bande avec une taille de pas depuis une extrémité gauche du spectre pleine bande jusqu'à une extrémité droite du spectre pleine bande, pour générer une pluralité de spectres superposés; et construire un spectre pleine bande combiné selon la pluralité de spectres superposés, pour détecter une première pluralité de signaux dans le spectre pleine bande combiné.

12. Procédé de la revendication 11, dans lequel les étapes comprennent en outre:
combiner la pluralité de spectres superposés selon une pluralité de parties superposées et une pluralité d'intensités de signal ajustées de la pluralité de spectres superposés, pour générer le spectre pleine bande combiné.

13. Procédé de l'une quelconque des revendications 11-12, dans lequel les étapes comprennent en outre:

l'obtention d'une pluralité de positions de fréquence correspondant à une pluralité de seuils d'intensité de signal dans le spectre pleine bande combiné, pour déterminer une pluralité de fréquences centrales; et l'enregistrement de la pluralité de signaux correspondant à la pluralité de fréquences centrales.

10

Transmitter — TX

Receiver — RX

FIG. 1

20

Signal detection device

fbs → | Receiving circuit | fbs → | Tuner circuit | ols → | Processing circuit | → det_sigs

200          210          220

FIG. 2

FIG. 3

FIG. 4

50

Start —500

Receive a full-band spectrum —502

Scan the full-band spectrum, to generate a plurality of overlapped spectrums —504

Construct a combined full-band spectrum according to the plurality of overlapped spectrums, to detect a plurality of signals in the combined full-band spectrum —506

End —508

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101778266 A

- US 20110135042 A1